(19) Europäisches Patentamt
European Patent Office
Office européen des brevets

(11) Veröffentlichungsnummer: **0 207 975**
**B1**

(12) **EUROPÄISCHE PATENTSCHRIFT**

(45) Veröffentlichungstag der Patentschrift: **16.05.90**

(51) Int. Cl.[5]: **C 09 K 19/34,** C 09 K 19/30, C 09 K 19/20, C 09 K 19/22, C 09 K 19/26, C 09 K 19/12

(21) Anmeldenummer: **86900664.3**

(22) Anmeldetag: **20.12.85**

(86) Internationale Anmeldenummer: **PCT/EP85/00733**

(87) Internationale Veröffentlichungsnummer: **WO 86/04081 17.07.86 Gazette 86/17**

# (54) FLÜSSIGKRISTALLINE PHASE.

(30) Priorität: **12.01.85 DE 3500897**

(43) Veröffentlichungstag der Anmeldung: **14.01.87 Patentblatt 87/03**

(45) Bekanntmachung des Hinweises auf die Patenterteilung: **16.05.90 Patentblatt 90/20**

(84) Benannte Vertragsstaaten: **CH DE FR GB LI**

(56) Entgegenhaltungen:
**EP-A- 56 501**
**EP-A- 151 446**
**US-A-4 490 276**

(73) Patentinhaber: **MERCK PATENT GESELLSCHAFT MIT BESCHRÄNKTER HAFTUNG**
**Frankfurter Strasse 250 Postfach 4119**
**D-6100 Darmstadt (DE)**

(72) Erfinder: **SCHEUBLE, Bernhard**
**Am Grenzweg 18**
**D-6146 Alsbach (DE)**
Erfinder: **WEBER, Georg**
**Wilhelm-Leuschner-Strasse 8**
**D-6106 Erzhausen (DE)**
Erfinder: **KRAUSE, Joachim**
**Samuel-Morse-Str. 14**
**D-6110 Dieburg (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft flüssigkristalline Phasen (FK-Phasen) mit besonders niedriger Schwellenspannung, besonders niedrigem Verhältnis $K_3/K_1$ der elastischen Konstanten für die Biegung ($K_3$) und die Spreizung ($K_1$) und breiten nematischen Phasenbereichen.

Für Flüssigkristall-Anzeigeelemente (FK-Anzeigeelemente) werden in zunehmendem Maße die Eigenschaften nematischer oder nematisch-cholesterischer flüssigkristalliner Materialen ausgenutzt, die ihre optischen Eigenschaften wie Lichtabsorption, Lichtstreuung, Doppelbrechung, Reflexionsvermögen oder Farbe unter dem Einfluß elektrischer Felder signifikant zu verändern. Die Funktion derartiger Anzeigeelemente beruht dabei beispielsweise auf den Phänomenen der dynamischen Streuung, der Deformation aufgerichteter Phasen, dem Guest-Host-Effekt, dem Schadt-Helfrich-Effekt in der verdrillten Zelle oder dem cholesterisch-nematischen Phasenübergang.

Für die technische Anwendung dieser Effekte in elektronischen Bauelementen werden flüssigkristalline Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder. Ferner wird von technisch verwendbaren flüssigkristallinen Phasen eine flüssigkristalline Mesophase in einem geeignetem Temperaturbereich, eine möglichst niedrige Viskosität, eine relativ niedrige optische Anisotropie, eine hohe Steilheit der elektrooptischen Kennlinie und ein ausreichendes Lösungsvermögen für pleochroitische Farbstoffe gefordert. Schließlich dürfen sie im Bereich des sichtbaren Lichtes keine Eigenabsorption aufweisen, d.h. sie müssen farblos sein.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis fünfundzwanzig, vorzugsweise drei bis fünfzehn, Verbindungen hergestellt, um als flüssigkristalline Phase verwendbare Materialien zu erhalten. Hierzu mischt man gewöhnlich mindestens eine Verbindung mit niedrigem Schmelz- und Klärpunkt mit mindestens einer Verbindung mit höherem Klärpunkt. Hierbei wird normalerweise ein Gemisch erhalten, dessen Schmelzpunkt unter dem der niedriger schmelzenden Komponente liegt, während der Klärpunkt zwischen den Klärpunkten der Komponenten liegt. Optimale Phasen lassen sich jedoch auf diese Weise nicht leicht herstellen, da die Komponenten mit den hohen Schmelz- und Klärpunkten den Gemischen häufig auch eine hohe Viskosität verleihen. Dadurch werden die Schaltzeiten der damit hergestellten elektrooptischen Anzeigeelemente in unerwünschter Weise verändert.

Zur Verminderung der Schwellenspannung werden in bisher bekannten FK-Phasen stark polare nematische Verbindungen mit terminaler Cyan-Gruppe zugesetzt. Das effektive Dipolmoment dieser Verbindungen wird jedoch durch eine mehr oder weniger starke antiparallele Assoziation dieser Moleküle deutlich vermindert, so daß relativ große Anteile polarer Verbindungen zugesetzt werden müssen. Hieraus resultieren wieder verschiedene Nachteile, wie ungünstige elastische Eigenschaften der FK-Phasen, hohe Viskosität. Beim Zusatz von p-Alkylbenzoesäure-4-cyan-3-fluorphenylestern als stark polare Komponenten zu ZLI—1957/5 (im Handel befindliche Mischung von E. Merck, Darmstadt, enthaltend Phenylcyclohexan-, Cyclohexylbiphenyl-, Bis-cyclohexylbiphenylverbindungen und Cyclohexylbenzoesäurephenylester) konnte gezeigt werden (Hp. Schad and S. M. Kelly, J. Chem. Phys. 81 (3), 1514—15 (1984)), daß die Schwellenspannung vermindert wird, was durch einen reduzierten Assoziationsgrad der zugesetzten Verbindungen erklärt wird. Jedoch auch diese FK-Phasen genügen nicht gleichzeitig allen oben angegebenen Erfordernissen. Insbesondere weisen sie für viele Anwendungen nach wie vor zu hohe Schwellenspannungen auf und außerdem sind die Kennliniensteilheiten aufgrund des verhältnismäßig großen Verhältnisses der elastischen Konstanten für die Biegung ($K_3$) und die Spreizung ($K_1$) $K_3/K_1$ für hochinformative Displays nicht ausreichend. Die bisher bekannten Mischungen sind daher mit einer zu hohen Schwellenspannung und/oder einer zu schlechten Kennliniensteilheit (gekennzeichnet durch ein zu hohes $K_3/K_1$) behaftet. Ferner weisen bisher bekannte Mischungen mit niedriger Schwellenspannung zu hohe smektisch-nematische Übergangstemperaturen auf.

US—A 4490276 beschreibt Flüssigkristallmischungen enthaltend Ester des 3-Chlor-4-cyanphenols und Phenyldioxanderivate. Diese Mischungen weisen zwar sehr niedrige Schwellenspannungen auf, eignen sich jedoch nicht in vergleichbarer Weise für hoch informative Displays, da die Kennliniensteilheiten aufgrund des verhältnismäßig großen Verhältnisses $K_3/K_1$ nicht ausreichend ist.

Es besteht somit immer noch ein großer Bedarf nach flüssigkristallinen Phasen mit hohen Klärpunkten, niederen Schmelzpunkten, niedriger Viskosität (und damit kurzen Schaltzeiten) und niedriger Schwellenspannung, die gleichzeitig günstige elastische Eigenschaften aufweisen.

Der Erfindung liegt die Aufgabe zugrunde, flüssigkristalline Phasen herzustellen, die eine nematische Phase im geforderten Temperaturbereich aufweisen und die oben angegebenen Nachteile nicht oder nur in geringerem Maße aufweisen.

Es wurde nun gefunden, daß Flüssigkristallphasen mit besonders günstigen Kombinationen von Materialeigenschaften, insbesondere breiten Mesophasenbereichen, außergewöhnlich niedriger Schwellenspannung und besonders günstigen elastischen Eigenschaften erhalten werden, wenn die Phase mindestens eine stark polare Komponente mit vermindertem Assoziationsgrad der Formel I

$$R^1—(A^1—Z^1)_m—A^2—Z^2—A^3 \qquad I$$

worin

$R^1$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können,

$A^1$ und $A^2$ jeweils 1,4-Phenylen, worin auch 1 bis 4 CH-Gruppen durch N ersetzt sein können oder 1,4-Cyclohexylen, worin auch eine oder zwei nicht benachbarte $CH_2$-Gruppen durch O ersetzt sein können,

$Z^1$ —CO—O—, —O—CO—, —$CH_2$—O—, —$OCH_2$—, —$CH_2CH_2$—, —CH=N—, —N=CH—, —N=NO—, —NO=N— oder eine Einfachbindung,

$Z^2$ —CO—O—, —O—CO—, —$CH_2O$—, —$OCH_2$—, —$CH_2CH_2$— oder eine Einfachbindung,

m 0, 1 oder 2, und

$A^3$ 3-Fluor-4-cyanphenyl oder 3,5-Difluor-4-cyanphenyl, bedeutet, und

zur Verminderung des Quotienten $K_3/K_1$ der elastischen Konstanten für die Biegung ($K_3$) und die Spreizung ($K_1$) der Phase auf einen Wert $\leq$ 1,1, mindestens eine unpolare flüssigkristalline Komponente enthält ausgewählt aus der Gruppe der Formeln IIa und IIb

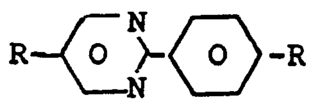

IIa

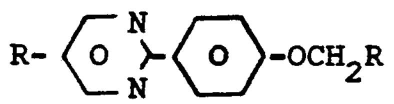

IIb

wobei R eine geradkettige Alkylgruppe bedeutet, und/oder in mindestens einer Verbindung der Formel I eine der Gruppen $A^1$ und $A^2$ Pyrimidin-2,5-diyl ist.

Unter Verbindungen mit verminderten Assoziationsgrad sollen hier solche Flüssigkristallverbindungen verstanden werden, die bei ähnlichem Gesamtdipolmoment des Moleküls (aus Vektor-Addition der Einzeldipolmomente der Strukturelemente) durch verminderte antiparallele Assoziation der Molekülverbindungen eine höhere dielektrische Anisotropie zeigen als beispielsweise Verbindungen wie 4-Alkyl-4'-cyanbiphenyle oder p-trans-4-Alkylcyclohexyl-benzonitrile und der Formel I entsprechen.

$$R^1—(A^1—Z^1)_m—A^2—Z^2—A^3 \qquad I$$

worin

R1 Alkyl mit 1 bis 12 C-Atomen, worin auch eine oder zwei nicht benachbarte $CH_2$-Gruppen durch O-Atome, —CO—, —O—CO—, —CO—O— und/oder —CH=CH— Gruppen ersetzt sein können,

$A^1$ und $A^2$ jeweils 1,4-Phenylen, worin auch 1 bis 4 CH-Gruppen durch N ersetzt sein können oder 1,4-Cyclohexylen, worin auch eine oder zwei nicht benachbarte $CH_2$-Gruppen durch O ersetzt sein können,

$Z^1$ —CO—O—, —O—CO—, —$CH_2$—O—, —$OCH_2$—, —$CH_2CH_2$—, —CH=N—, —N=CH—, —N=NO—, —NO=N— oder eine Einfachbindung,

$Z^2$ —CO—O—, —O—CO—, —$CH_2O$—, —$OCH_2$—, —$CH_2CH_2$— oder eine Einfachbindung,

m 0, 1 oder 2, und

$A^3$ 3-Fluor-4-cyanphenyl oder 3,5-Difluor-4-cyanphenyl, bedeutet.

$R^1$ ist vorzugsweise geradkettige Alkyl oder Alkoxy mit 1 bis 7 C-Atomen.

$A^1$ und $A^2$ sind vorzugsweise jeweils unabhängig voneinander 1,4-Phenylen, 1,4-Cyclohexylen, 1,3-Dioxan-2,5-diyl oder Pyrimidin-2,5-diyl, insbesondere 1,3-Dioxan-2,5-diyl oder Pyrimidin-2,5-diyl, wobei jedoch nur eine der Gruppen $A^1$ und $A^2$ 1,3-Dioxan-2,5-diyl oder Pyrimidin-2,5-diyl bedeutet.

Ferner bevorzugt sind Verbindungen der Formel I, worin $A^1$ und $A^2$ 1,4-Cyclohexylen und $Z^2$ eine Einfachbindung oder —CO—O— bedeutet.

$Z^1$ ist vorzugsweise eine Einfachbindung.

$Z^2$ ist vorzugsweise —CO—O—, —$CH_2CH_2$—, —$CH_2O$— oder eine Einfachbindung, insbesondere —CO—O— oder eine Einfachbindung.

m ist vorzugsweise 0 oder 1.

Die erfindungsgemäßen FK-Phasen haben vorzugsweise einen Quotienten $K_3/K_1 \leqq$ 1,0 und eine Schwellenspannung $<$ 1,5 Volt, insbesondere bevorzugt einen Quotienten $K_3/K_1 \leqq$ 0,9 und eine Schwellenspannung $<$ 1,4 Volt, bzw. besonders bevorzugt $<$ 1,2 Volt. Bevorzugte erfindungsgemäße FK-Phasen haben bis −20°, besonders bevorzugt bis −30°C, keine smektische Phasenbereiche.

Gegenstand der Erfindung sind somit die oben beschriebenen Flüssigkristallphasen, die gegebenenfalls auch einen oder mehrere pleochroitische Farbstoffe enthalten können (Guest-Host-Systeme), sowie die Verwendung dieser Phasen in Flüssigkristallanzeigeelementen.

Ferner sind Gegenstand der Erfindung elektrooptische Flüssigkristallanzeigeelemente, die solche Phasen enthalten.

Die erfindungsgemäßen Guest-Host-Systeme enthalten in der Regel 0,1 bis 15, vorzugsweise 0,5 bis 10, insbesondere 1 bis 7 Gewichtsprozent pleochroitische Farbstoffe.

Vorzugsweise werden die pleochroitischen Farbstoffe des erfindungsgemäßen Guest-Host-Systems so

gewählt, daß sie einen geeigneten Teil des sichtbaren Spektrums abdecken und daß die Absorption in diesem Bereich mehr oder weniger konstant ist.

Die Herstellung der erfindungsgemäßen Guest-Host-Systeme erfolgt in an sich üblicher Weise. In der Regel werden die gewünschten Mengen der verschiedenen pleochroitischen Farbstoffe im Host-Material gelöst, zweckmäßig bei erhöhter Temperatur.

Es ist jedoch auch möglich, Lösungen des pleochroitischen Farbstoffes und des Host-Materials in einem geeigneten organischen Lösungsmittel, zum Beispiel Aceton, Chloroform oder Methanol, zu mischen und das Lösungsmittel nach gründlicher Durchmischung wieder zu entfernen, beispielsweise durch Destillation unter vermindertem Druck. Selbstverständlich muß bei dieser Verfahrensweise darauf geachtet werden, daß durch das Lösungsmittel keine Verunreinigungen oder unerwünschten Dotierungsstoffe eingeschleppt werden.

Die einzelnen Verbindungen der Formel I sowie die unpolaren Komponenten der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formel I werden beispielsweise beschrieben in den deutschen Offenlegungsschriften 34 05 914, 34 01 320, 34 11 571 und 33 15 295, 32 09 178; in der europäischen Patentschrift EP—PS 0 019 665; in S. M. Kelly and Hp. Schad, Helvetica Chimica Acta, *67*, 1580—1587 (1984); in S. M. Kelly, ebenda, *67*, 1572—1579 (1984); sowie in den europäischen Offenlegungsschriften EP—OS 0 099 099 und EP—OS 0 119 756 und in der japanischen OS 59—191 789. Entsprechende unpolare flüssigkristalline Komponenten sind beispielsweise beschrieben in den deutschen Offenlegungsschriften 33 15 295, 33 46 175, 34 01 320, 34 01 321, 34 04 116, 34 11 571, 21 67 252, 22 57 588, 24 29 093, 25 47 737, 26 41 724, 29 44 905, 29 51 099, 31 40 868, 32 28 350; in den EP—OS 0 014 885, 0 084 194, 0 104 011, 0 111 695, 0 122 389, 0 126 883 und in der japanischen OS 59—98065.

Überraschenderweise zeigt sich, daß die erfindungsgemäße Kombination von Verbindungen der Formel I und unpolaren Komponenten FK-Phasen ergibt, die zum einen breite Mesophasenbereiche mit niederen Schmelzpunkten und niederen smektisch-nematischen Übergangstemperaturen aufweisen, als auch bei außergewöhnlich niedrigen Schwellenspannungen durch besonders günstige Verhältnisse $K_3/K_1$ der elastischen Konstanten für die Biegung ($K_3$) und die Spreizung ($K_1$) gekennzeichnet sind.

Vorzugsweise enthalten die erfindungsgemäßen FK-Phasen mindestens fünf Komponenten, insbesondere vorzugsweise mindestens drei Komponenten, der Formel I und/oder mindestens zwei, vorzugsweise mindestens vier, insbesondere mindestens sechs, unpolare Komponenten.

Der Gesamtanteil der Verbindungen der Formeln I und der unpolare Komponenten in den erfindungsgemäßen FK-Phasen beträgt vorzugsweise mindestens 45% insbesondere mindestens 50%.

Der Anteil der Verbindungen der Formel I ist vorzugsweise mindestens 18% und besonders bevorzugt im Bereich von 18 bis 73%. Der Anteil der unpolaren Komponenten ist vorzugsweise mindestens 27%, insbesondere bevorzugt mindestens 32%.

Bevorzugte Verbindungen der Formel I sind diejenigen der Teilformeln Ia bis Iu:

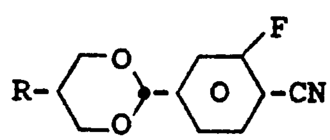
Ia

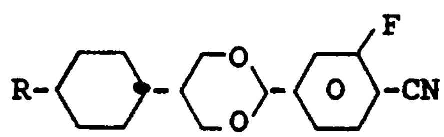
Ib

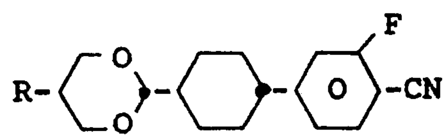
Ic

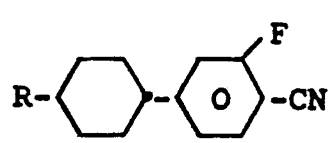
Id

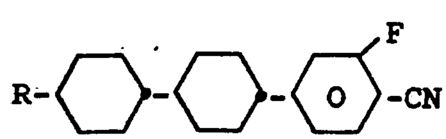
Ie

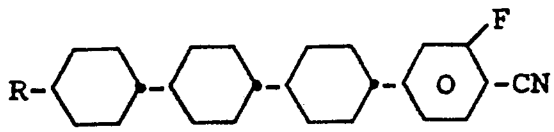

If

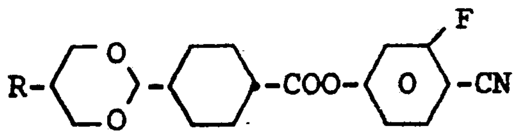

Ig

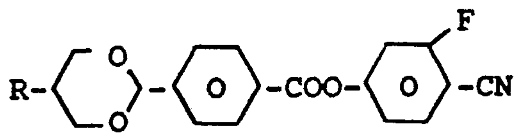

Ih

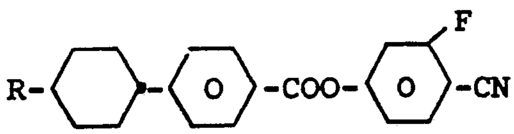

Ii

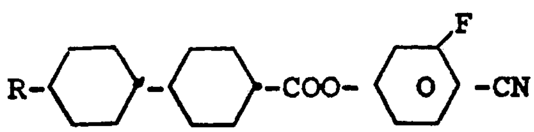

Ij

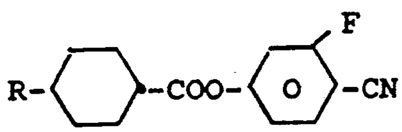

Ik

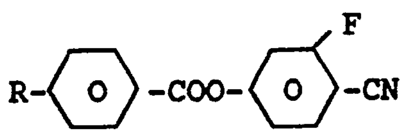

Il

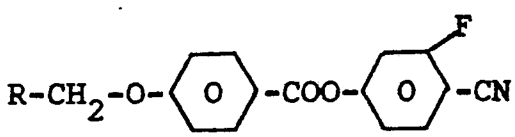

Im

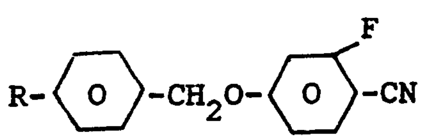

In

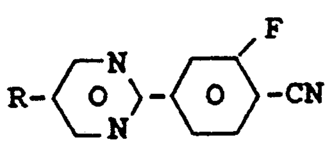

Io

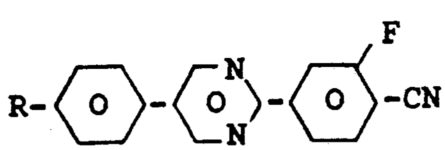

Ip

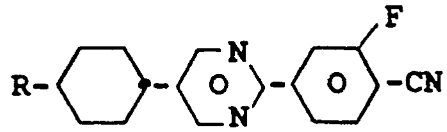 Iq

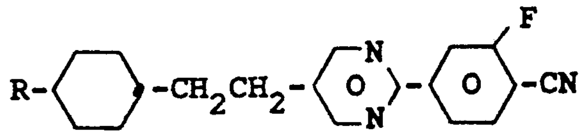 Ir

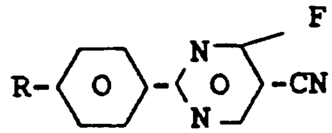 Is

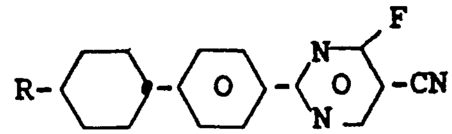 It

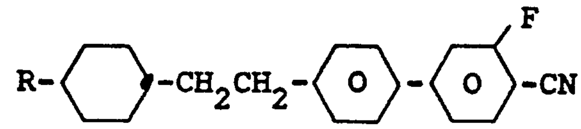 Iu

Unter den vorstehenden Teilformeln sind diejenigen der Formeln Ia, Ib, Id, Ie, Ig, Ih, Ik, Il, Im und Is bevorzugt. Besonders bevorzugt sind diejenigen der Teilformeln Ia, Ib, Ig, Ih, Im und Is.

Bevorzugte erfindungsgemäße FK-Phasen enthalten mindestens eine, vorzugsweise mindestens zwei, Verbindungen der Formel I, worin m = 0 bedeutet und gleichzeitig mindestens eine Verbindung der Formel I, worin m = 1 bedeutet.

Die unpolaren flüssigkristallinen Komponenten der erfindungsgemäßen FK-Phasen haben vorzugsweise eine dielektrische Anisotropie im Bereich von −2 bis +2, insbesondere im Bereich von −1,5 bis +1. Beispielsweise können Verbindungen der Formeln A bis G eingesetzt werden, worin Alkyl bzw. Alkoxy

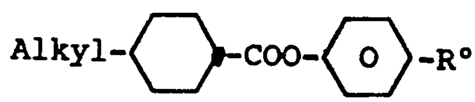 A

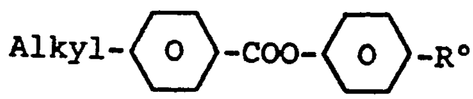 B

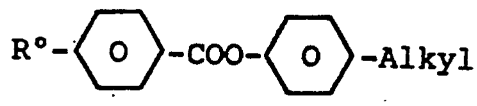 C

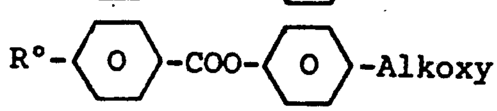 D

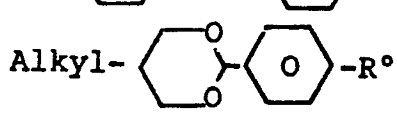 E

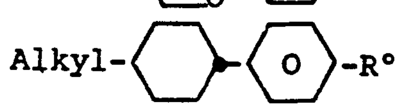 F

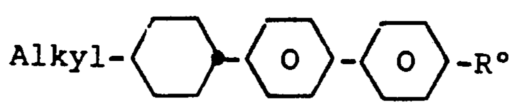 G

jeweils eine geradkettige Alkyl- bzw. Alkoxygruppe mit 1 bis 7 C-Atomen bedeutet und R° eine geradkettige Alkyl- oder Alkoxygruppe bzw. eine Oxaalkyl- oder Alkenylgruppe mit 1 bis 7 C-Atomen bedeutet.

Besonders bevorzugt sind Verbindungen der Formeln A, C, E, F und G, insbesondere solche, worin R° Alkoxy bedeutet.

Vorzugsweise sind die unpolaren Komponenten jedoch stickstoffhaltige flüssigkristalline Verbindungen.

Die stickstoffhaltigen flüssigkristallinen Komponenten der erfindungsgemäßen FK-Phasen sind flüssigkristalline Verbindungen enthaltend mindestens eines der Strukturelemente (1) bis (4),

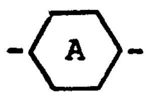  $-N(O)=N-$  $-CH=N-$  $-NCS$

(1) (2) (3) (4)

wobei der Ring A 1,4-Phenylen, 2,6-disubstituiertes Naphthalin, -Di- oder -Tetrahydronaphthalin bedeutet, worin jeweils mindestens eine, vorzugsweise zwei, CH-Gruppen durch N ersetzt sind.

A ist vorzugsweise eine Gruppe ausgewählt aus den Formeln (5) bis (12).

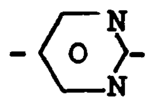
(5)

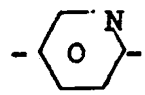
(6)

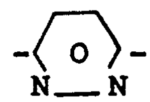
(7)

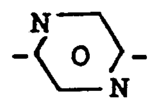
(8)

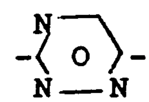
(9)

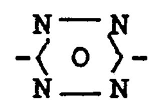
(10)

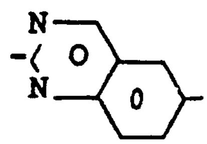
(11)

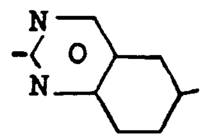
(12)

Bevorzugt sind Gruppen der Formeln (5), (6), (7) und (12), insbesondere (5).

Nicht als stickstoffhaltige Komponenten sollen in diesem Zusammenhang Flüssigkristallverbindungen mit Nitril-Flügelgruppen bzw. mit lateralen Nitrilgruppen verstanden werden.

Wichtige derartige stickstoffhaltige Komponenten lassen sich durch die Formel II charakterisieren,

$$R'—X—Y—Z—R'' \qquad II$$

worin X und Z je ein carbo- oder heterocyclische Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

| | | |
|---|---|---|
| Y | —CH=CH— | —N(O)=N— |
| | —CH=CQ— | —CH=N(O)— |
| | —C≡C— | $—CH_2—CH_2—$ |
| | —CO—O— | $—CH_2—O—$ |
| | —CO—S— | $—CH_2—S—$ |
| | —CH=N— | —COO—Phe—COO— |

oder eine C—C-Einfachbindung, Q Halogen, vorzugsweise Chlor, oder —CN, und R' und R'' Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten, wobei mindestens eine der Gruppen X und Z 2,5-disubstituiertes Pyrimidin, Chinazolin oder Tetrahydrochinazolin und/oder Y —CH=N— oder —N(O)=N— bedeutet.

Besonders bevorzugte stickstoffhaltige Komponenten sind diejenigen der Teilformeln IIa bis IIt,

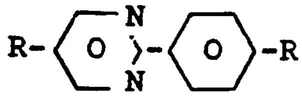

IIa

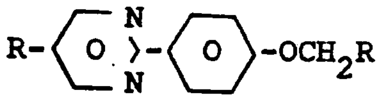

IIb

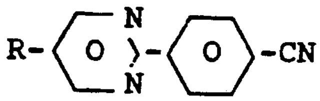

IIc

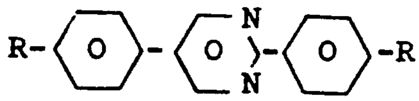

IId

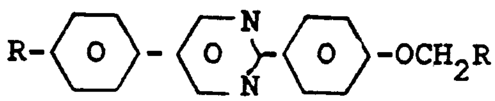

IIe

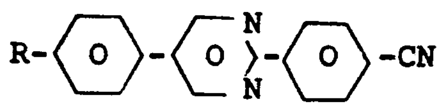

IIf

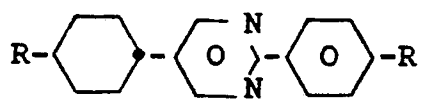

IIg

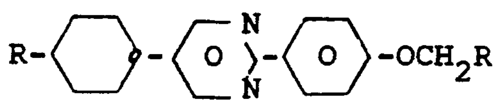

IIh

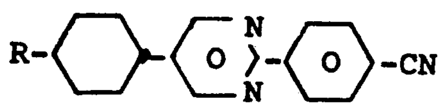

IIi

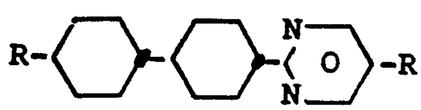

IIj

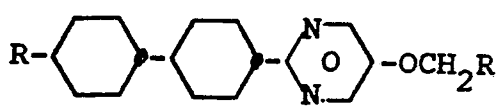

IIk

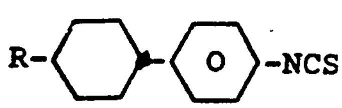

IIl

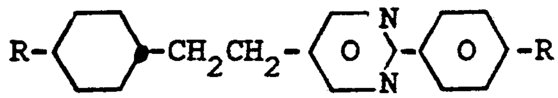

IIm

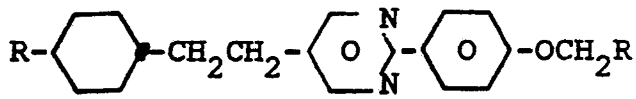

IIn

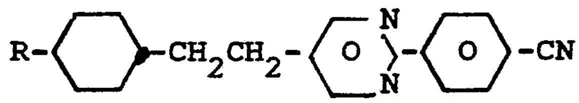

IIo

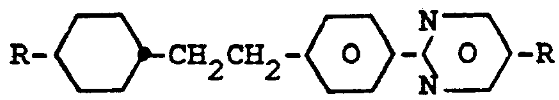

IIp

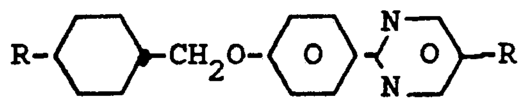

IIq

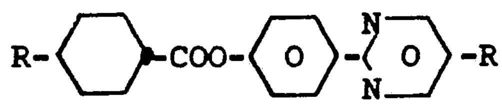

IIr

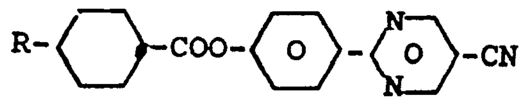

IIs

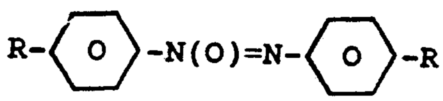

IIt

sowie diejenigen Pyrimidinderivate der Teilformeln Io, Ip, Iq, Ir, Is und It.

Unter den vorstehenden Teilformeln sind diejenigen der Formeln IIb, IIc, IIe, IIf, IIh, IIi, IIj, III und IIr bevorzugt. Besonders bevorzugt sind diejenigen der Formel IIb.

Besonders bevorzugte erfindungsgemäße FK-Phasen sind diejenigen enthaltende Verbindungen der Teilformeln Io, Ip, Iq, Ir, Is und/oder It. Diese Verbindungen mit sehr günstigen Quotienten $K_3/K_1$ sind gleichzeitig stark polare Komponenten mit verminderten Assoziationsgrad. Die stickstoffhaltigen flüssigkristallinen Komponenten in erfindungsgemäßen FK-Phasen können somit mit den stark polaren Verbindungen mit verminderten Assoziationsgrad identisch sein, wobei dann die erfindungsgemäße FK-Phase mindestens zwei derartige Verbindungen enthält.

In den Verbindungen der vor- und nachstehenden Formeln bedeutet Cy trans-1,4-Cyclohexylen und Ph 1,4-Phenylen.

Als weitere Komponenten der erfindungsgemäßen FK-Phasen neben den Verbindungen der Formeln I und II kommen Verbindungen der Formel III

$$R^1—(Cy)_r—(Ph)_s—Z^3—Ph—CN \qquad III$$

worin

r 0, 1 oder 2,

s 0 oder 1,

r + s 1 oder 2,

$Z^3$ —CO—O— oder eine Einfachbindung bedeutet, und $R^1$, Cy und Ph die angegebenen Bedeutungen haben und/oder Verbindungen der Formel IV

$$R^1—(Cy)_r—Z^4—(Ph)_t—Z^5—(Cy)_s—R^2 \qquad IV$$

worin

t 0, 1 oder 2,

r + s + t 2, 3 oder 4,

$Z^4$ und $Z^5$ jeweils —CO—O—, —O—CO—, —$CH_2CH_2$— oder eine Einfachbindung, und $R^2$ eine der Bedeutungen von $R^1$ hat,

und $R^1$, Cy, Phe, r und s die angegebenen Bedeutungen haben, in Betracht.

Bevorzugte Verbindungen der Formel III sind diejenigen der Teilformeln IIIa bis IIIh:

| | |
|---|---|
| R—Ph—Ph—Cn | IIIa |
| $RCH_2O$—Ph—Ph—CN | IIIb |
| R—Cy—Ph—CN | IIIc |
| R—Cy—Ph—Ph—CN | IIId |
| R—Cy—Cy—Ph—CN | IIIe |
| R—Ph—COO—Ph—CN | IIIf |
| R—Cy—COO—Ph—CN | IIIg |
| R—Cy—Ph—COO—Ph—CN | IIIh |

Bevorzugte Verbindungen der Formel IV sind diejenigen der Teilformeln IVa bis IVj:

| | |
|---|---|
| R—Cy—Ph—R | IVa |
| R—Cy—Ph—$OCH_2R$ | IVb |
| R—Cy—Ph—Ph—R | IVc |
| R—Cy—Ph—Ph—$OCH_2R$ | IVd |
| R—Cy—Ph—Ph—R (F am mittleren Bindungsstrich) | IVe |
| R—Cy—Ph—Ph—Cy—R | IVf |
| R—Cy—Ph—Ph—Cy—R (F am mittleren Bindungsstrich) | IVg |
| R—Cy—Cy—COO—Cy—R | IVh |
| R—Cy—CY—$CH_2CH_2$—Cy—R | IVi |
| R—Cy—Ph—Ph—$CH_2CH_2$—Cy—R | IVj |

Unter den vorstehenden Teilformeln sind diejenigen der Formeln IVb, IVe, IVf, IVg, IVh und IVi bevorzugt. Besonders bevorzugt sind diejenigen der Teilformeln IVe, IVf, IVg, IVh und IVi.

Weiterhin bevorzugt sind erfindungsgemäße flüssigkristalline Phasen enthaltend Phenyldioxanverbindungen. Derartige Verbindungen sind in der Deutschen Offenlegungsschrift DE—OS 29 44 905 beschrieben. Besonders bevorzugt sind 2-p-Cyanphenyl-5-n-alkyl-1,3-dioxane.

Bei den Verbindungen der vorstehenden Teilformeln bedeutet R eine geradkettige Alkylgruppe vorzugsweise mit 1 bis 7 C-Atomen (bei den stickstoffhaltigen Komponenten, den Verbindungen der Formel II sowie deren Teilformeln vorzugsweise mit 2 bis 10 C-Atomen), worin auch eine $CH_2$-Gruppe durch —O— oder —CH=CH— ersetzt sein kann. Besonders bevorzugte Gruppe R sind Methyl, Ethyl, n-Propyl, n-Butyl, n-Pentyl, n-Hexyl und n-Heptyl, Methoxy, Ethoxy, n-Propoxy, n-Butoxy, n-Pentoxy, n-Hexoxy, n-Heptoxy, n-Octoxy, N-Nonoxy und n-Decoxy.

Bei Verbindungen der vorstehenden Teilformeln mit zwei Gruppen R haben beide Gruppe R jeweils unabhängig voneinander eine der vorstehend genannten Bedeutungen.

Wenn die Alkylgruppen 3 oder mehr Kohlenstoffatome enthalten, können diese in gerader oder verzweigter Kette angeordnet sein. In den erfindungsgemäßen Phasen werden jedoch keine Komponenten verwendet, die mehr als eine verzweigte Alkylgruppe enthalten. Derartige verzweigte Alkylgruppen enthalten im Rahmen der vorliegenden Erfindung nicht mehr als eine Kettenverzweigung; vorzugsweise handelt es sich dabei um eine Methyl- oder Ethylgruppe in 1- oder 2-Stellung des Kohlenstoffgerüstes, so daß als verzweigte Alkylgruppen insbesondere in Frage kommen: 2-Methylpropyl, 2-Methylbutyl, 1-Methylpentyl, 2-Methylpentyl, 1-Methylhexyl. In der Regel enthalten die erfindungsgemäßen flüssigkristallinen Dielektrika nur eine Komponente mit einem verzweigtkettigen Alkylrest, um gewünschtenfalls optische Aktivität zu induzieren. Zu diesem Zweck werden normalerweise nicht mehr als 10 Gewichtsprozent, vorzugsweise 0,5 bis 3 Gewichtsprozent einer Komponente mit einem verzweigten Alkylrest zugefügt.

Bei den Verbindungen der vorstehenden Teilformeln bedeutet

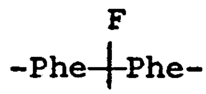

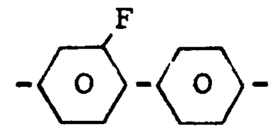

oder

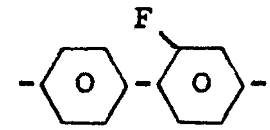

Die erfindungsgemäßen FK-Phasen enthalten vorzugsweise nicht gleichzeitig Verbindungen der Formeln III und IV.

Die Herstellung der erfindungsgemäßen Phasen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Wenn dabei eine Temperatur oberhalb des Klärpunkts des Hauptbestandteils gewählt wird, kann die Vollständigkeit des Lösevorgangs besonders leicht beobachtet werden.

Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können.

Derartige Zusätze sind dem Fachmann bekannt und in der Literatur ausführlich beschrieben. Beispielsweise können Leitsalze, vorzugsweise Ethyl-dimethyldodecylammonium-4-hexyloxybenzoat, Tetrabutylammoniumtetraphenylboranat oder Komplexsalze von Kronenethern (vgl. z.B. I. Haller et al., Mol. Cryst. Liq. Cryst. Band *24*, Seiten 249—258, (1973)) zur Verbesserung der Leitfähigkeit oder Substanzen zur Veränderung der dielektrischen Anisotropie, der Viskosität und/oder der Orientierung der nematischen Phasen zugesetzt werden. Derartige Substanzen sind z.B. in den DE—OS 22 09 127, 22 40 864, 23 21 632, 23 38 281, 24 50 088, 26 37 430, 28 53 728 und 29 07 177 beschrieben.

Die folgenden Beispiele sollen die Erfindung erläutern, ohne sie zu begrenzen. In den Beispielen sind Schmelzpunkt und Klärpunkt einer flüssigkristallinen Substanz in Grad Celsius angegeben. Die Prozentzahlen beziehen sich auf Gewichtsprozente. Die Werte der Schwellenspannung beziehen sich auf einen Beobachtungswinkel von 0°, 10% Kontrast und 20°C.

## Beispiel 1

Eine Flüssigkristallphase, bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
6% 2-p-Nonyloxyphenyl-5-hexylpyrimidin,
20% Buttersäure-(p-trans-4-propylcyclohexylphenylester),
6% 4-(trans-4-Pentylcyclohexyl)-4′-(trans-4-propylcyclohexyl)-2-fluorbiphenyl und
5% 4,4′-Bis-(trans-4-Pentylcyclohexyl)-2-fluorbiphenyl

hat einen Schmelzpunkt von −9°, bis −30° keine smektische Phase, einen Klärpunkt von 68°, einen Quotienten $K_3/K_1$ von 0,88 bei 20° und eine Schwellenspannung von 1,4 Volt.

## Beispiel 2

Eine Flüssigkristallphase, bestehend aus

12% 2-(4-Cyan-3-fluorphenyl)-5-propylpyrimidin,

12% 2-(4-Cyan-3-fluorphenyl)-5-butylpyrimidin,
10% 2-(4-Cyan-3-fluorphenyl)-5-pentylpyrimidin,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
6% 2-p-Nonyloxyphenyl-5-hexylpyrimidin,
10% Buttersäure-(p-trans-4-propylcyclohexylphenylester),
6% 4-(trans-4-Pentylcyclohexyl)-4'-(trans-4-propylcyclohexyl)-2-fluorbiphenyl und
5% 4,4'-Bis-(trans-4-Pentylcyclohexyl)-2-fluorbiphenyl

hat eine Schwellenspannung von 1,15 V und einen Quotienten $K_3/K_1$ von 0,80 bei 20°.

## Beispiel 3

Eine Flüssigkristallphase, bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
17% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-Pentylcyclohexyl)-2-fluorbiphenyl

hat einen Schmelzpunkt von −9°, bis −30° keine smektische Phase, einen Klärpunkt von 65°, einen Quotienten $K_3/K_1$ von 0,83 bei 20° und eine Schwellspannung von 1,4 Volt.

## Beispiel 4

Eine Flüssigkristallphase bestehend aus

12% 2-(4-Cyan-3-fluorphenyl)-5-propyl-1,3-dioxan,
11% 2-(4-Cyan-3-fluorphenyl)-5-butyl-1,3-dioxan,
10% 2-(4-Cyan-3-fluorphenyl)-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
8% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-Pentylcyclohexyl)-2-fluorbiphenyl

hat eine Schwellenspannung von 1,25 Volt und einen Quotienten $K_3/K_1$ von 0,85 bei 20°.

## Beispiel 5

Eine Flüssigkristallphase bestehend aus

12% 2-(4-Cyan-3-fluorphenyl)-5-propyl-pyrimidin,
11% 2-(4-Cyan-3-fluorphenyl)-5-butyl-pyrimidin,
10% 2-(4-Cyan-3-fluorphenyl)-5-pentyl-pyrimidin,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,

5% 2-p-Heptyloxyphenyl-5-heptylpyrimidin,
5% 2-p-Nonyloxyphenyl-5-heptylpyrimidin,
8% 2-(4-Cyan-3-fluorphenyl)-5-(p-pentylphenyl)pyrimidin,
5% 4-(trans-4-Pentylcyclohexyl)-4'-(trans-4-propylcyclohexyl)-2-fluorbiphenyl und
4% 4,4'-Bis-(trans-4-Pentylcyclohexyl)-2-fluorbiphenyl
hat eine Schwellenspannung von 1,10 Volt und einen Quotienten $K_3/K_1$ von 0,78 bei 20°.

Beispiel 6

Eine Flüssigkristallphase bestehend aus
6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-(5-Propyl-1,3-dioxan-2-yl)-benzoesäure-(4-cyan-3-fluorphenylester),
5% p-Ethoxybenzoesäure-(4-cyan-3-fluorphenylester),
5% p-Pentyloxybenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
7% 2-p-Nonyloxyphenyl-5-hexylpyrimidin,
20% Buttersäure-(p-trans-4-propylcyclohexylphenylester),
6% 4-(trans-4-Pentylcyclohexyl)-4'-(trans-4-propylcyclohexyl)-2-fluorbiphenyl und
5% 4,4'-Bis-(trans-4-Pentylcyclohexyl)-2-fluorbiphenyl
hat eine Schwellenspannung von 1,45 volt und einen Quotienten $K_3/K_1$ von 0,92 bei 20°.

Beispiel 7

Eine Flüssigkristallphase bestehend aus
9% 2-(p-Propylphenyl)-4-fluor-5-cyanpyrimidin,
9% 2-(p-Pentylphenyl)-4-fluor-5-cyanpyrimidin,
7% p-(5-Propyl-1,3-dioxan-2-yl)-benzoesäure-(4-cyan-3-fluorphenylester),
8% p-Propoxybenzoesäure-(4-cyan-3-fluorphenylester),
8% p-Pentyloxybenzoesäure-(4-cyan-3-fluorphenylester),
5% 2-p-Methoxyphenyl-5-hexylpyrimidin,
5% 2-p-Heptyloxyphenyl-5-hexylpyrimidin,
5% 2-p-Methoxyphenyl-5-heptylpyrimidin,
5% 2-p-Heptyloxyphenyl-5-heptylpyrimidin,
5% 2-p-Nonyloxyphenyl-5-heptylpyrimidin,
17% trans-1-p-Propylphenyl-4-pentylcyclohexan,
6% 4-(trans-4-Pentylcyclohexyl)-4'-(trans-4-propylcyclohexyl)-2-fluorbiphenyl,
6% 4,4'-Bis-(trans-4-pentylcyclohexyl)-2-fluorbiphenyl und
5% 4,4'-Bis-(trans-4-propylcyclohexyl)-2-fluorbiphenyl
weist entsprechende günstige Eigenschaften auf.

Beispiel 8

Eine Flüssigkristallphase bestehend aus
6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% 4'-[2-(trans-4-propylcyclohexyl)-ethyl]-3-fluor-4-cyanbiphenyl,
5% p-Ethoxybenzoesäure-(4-cyan-3-fluorphenylester),
5% p-Propoxybenzoesäure-(4-cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
17% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-Pentylcyclohexyl)-2-fluorbiphenyl
hat eine Schwellenspannung von 1,45 Volt und einen Quotienten $K_3/K_1$ von 0,87 bei 20°.

Beispiel 9

Eine Flüssigkristallphase bestehend aus
6% 2-p-Cyanphenyl-5-propyl-1,3-dioxan,
10% 2-p-Cyanphenyl-5-butyl-1,3-dioxan,

8% 2-p-Cyanphenyl-5-pentyl-1,3-dioxan,
8% 2-(4-Cyan-3-fluorphenyl)-5-[2-(trans-4-propylcyclohexyl)-ethyl]-pyrimidin,
5% p-Ethoxybenzoesäure-(4-cyan-3-fluorphenylester),
5% p-Propoxybenzoesäure-(4-cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
17% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-Pentylcyclohexyl)-2-fluorbiphenyl

hat eine Schwellenspannung von 1,4 Volt und einen Quotienten $K_3/K_1$ von 0,85 bei 20°.

Beispiel 10

Eine Flüssigkristallphase bestehend aus

6% 2-(4-Cyan-3-fluorphenyl)-5-propyl-1,3-dioxan,
6% 2-(4-Cyan-3-fluorphenyl)-5-butyl-1,3-dioxan,
7% 2-(4-Cyan-3-fluorphenyl)-5-pentyl-1,3-dioxan,
8% 2-(4-Cyan-3-fluorphenyl)-5-[2-(trans-4-propylcyclohexyl)-ethyl]-pyrimidin,
7% p-Ethoxybenzoesäure-(4-cyan-3-fluorphenylester),
7% p-Propoxybenzoesäure-(4-cyan-3-fluorphenylester),
6% 2-p-Pentyloxyphenyl-5-hexylpyrimidin,
6% 2-p-Heptyloxyphenyl-5-hexylpyrimidin,
6% 2-p-Heptyloxyphenyl-5-heptylpyrimidin,
6% 2-p-Nonyloxyphenyl-5-heptylpyrimidin,
5% 2-p-Pentyloxyphenyl-5-p-pentylphenylpyrimidin,
5% 2-p-Heptyloxyphenyl-5-p-pentylphenylpyrimidin,
15% trans-1-p-Propylphenyl-4-pentylcyclohexan,
5% 4-(trans-4-Pentylcyclohexyl)-4'-(trans-4-propylcyclohexyl)-2-fluorbiphenyl und
5% 4,4'-Bis-(trans-4-pentylcyclohexyl)-2-fluorbiphenyl

weist entsprechende günstige Eigenschaften auf.

Beispiel 11

Man stellt eine Flüssigkristallphase her bestehend aus

8% 2-(4-Cyan-3-fluorphenyl)-5-propylpyrimidin,
9% 2-(4-Cyan-3-fluorphenyl)-5-butylpyrimidin,
8% 2-(4-Cyan-3-fluorphenyl)-5-pentylpyrimidin,
10% 4'-[2-(trans-4-ethylcyclohexyl)-ethyl]-3-fluor-4-cyanbiphenyl,
7% p-Ethoxybenzoesäure-(4-cyan-3-fluorphenylester),
8% p-Propoxybenzoesäure-(4-cyan-3-fluorphenylester),
8% p-Butoxybenzoesäure-(4-cyan-3-fluorphenylester),
7% 2-(4-Cyan-3-fluorphenyl)-5-[2-(trans-4-propylcyclohexyl)-ethyl]-pyrimidin,
12% Buttersäure-(p-trans-4-propylcyclohexylphenylester,
7% Buttersäure-(p-trans-4-pentylcyclohexylphenylester,
6% 4,4'-Bis-(trans-4-Propylcyclohexyl)-2-fluorbiphenyl,
5% 4,4'-Bis-(trans-4-Pentylcyclohexyl)-2-fluorbiphenyl,
5% 4-(trans-4-Pentylcyclohexyl)-4'-(trans-4-propylcyclohexyl)-2-fluorbiphenyl.

Beispiel 12

Man stellt eine Flüssigkristallphase her, bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
6% 2-p-Nonyloxyphenyl-5-hexylpyrimidin,
10% Buttersäure-(p-trans-4-propylcyclohexylphenylester),
6% 4-(trans-4-Pentylcyclohexyl)-4'-(trans-4-propylcyclohexyl)-2-fluorbiphenyl,
5% 4,4'-Bis-(trans-4-Pentylcyclohexyl)-2-fluorbiphenyl und
10% p-Methoxybenzoesäure-(p-pentylphenylester).

Beispiel 13

Man stellt eine Flüssigkristallphase her, bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
6% 2-p-Nonyloxyphenyl-5-hexylpyrimidin,
10% Buttersäure-(p-trans-4-propylcyclohexylphenylester),
6% 4-(trans-4-Pentylcyclohexyl)-4'-(trans-4-propylcyclohexyl)-2-fluorbiphenyl,
5% 4,4'-Bis-(trans-4-Pentylcyclohexyl)-2-fluorbiphenyl und
10% trans-4-Propylcyclohexancarbonsäure-(p-ethoxyphenylester).

Beispiel 14

Man stellt eine Flüssigkristallphase her, bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
6% 2-p-Nonyloxyphenyl-5-hexylpyrimidin,
10% Buttersäure-(p-trans-4-propylcyclohexylphenylester),
6% 4-(trans-4-Pentylcyclohexyl)-4'-(trans-4-propylcyclohexyl)-2-fluorbiphenyl,
5% 4,4'-Bis-(trans-4-Pentylcyclohexyl)-2-fluorbiphenyl und
10% trans-4-Propylcyclohexancarbonsäure-(p-methoxymethylphenylester).

Beispiel 15

Man stellt eine Flüssigkristallphase her, bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
5% p-Propylbenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
6% 2-p-Nonyloxyphenyl-5-hexylpyrimidin,
10% Buttersäure-(p-trans-4-propylcyclohexylphenylester),
6% 4-(trans-4-Pentylcyclohexyl)-4'-(trans-4-propylcyclohexyl)-2-fluorbiphenyl,
5% 4,4'-Bis-(trans-4-Pentylcyclohexyl)-2-fluorbiphenyl und
10% 2-p-Ethoxyphenyl-5-propyl-1,3-dioxan.

Beispiel 16

Man stellt eine Flüssigkristallphase her, bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
5% Propylbenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
6% 2-p-Nonyloxyphenyl-5-hexylpyrimidin,
10% Buttersäure-(p-trans-4-propylcyclohexylphenylester),
6% 4-(trans-4-Pentylcyclohexyl)-4'-(trans-4-propylcyclohexyl)-2-fluorbiphenyl,

5% 4,4'-Bis-(trans-4-Pentylcyclohexyl)-2-fluorbiphenyl und
10% p-(trans-4-Hex-3-enyl-cyclohexyl)-benzonitril.

Beispiel 17

Man stellt eine Flüssigkristallphase her, bestehend aus
6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-trans-4-Propylcyclohexyl-benzoesäure-(4-cyan-3-fluorphenylester),
5% p-Ethylbenzoesäure-(4-cyan-3-fluorphenylester),
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin,
6% 2-p-Nonyloxyphenyl-5-hexylpyrimidin,
10% Buttersäure-(p-trans-4-propylcyclohexylphenylester),
6% 4-(trans-4-Pentylcyclohexyl)-4'-(trans-4-propylcyclohexyl)-2-fluorbiphenyl,
5% 4,4'-Bis-(trans-4-Pentylcyclohexyl)-2-fluorbiphenyl und
10% p-(trans-4-Pentylcyclohexyl)-phenylisothiocyanat.

Die Phasen der Beispiele 11—17 weisen entsprechende günstige Eigenschaften auf.

Beispiel 18

Eine Flüssigkristallphase bestehend aus
9% 2-p-Cyanphenyl-5-propyl-1,3-dioxan,
6% 2-p-Cyanphenyl-5-butyl-1,3-dioxan,
9% 2-p-Cyanphenyl-5-pentyl-1,3-dioxan,
5% p-Ethylbenzoesäure-(4-cyan-3-fluorphenylester),
4% p-Propylbenzoesäure-(4-cyan-3-fluorphenylester),
7% p-Pentylbenzoesäure-(4-cyan-3-fluorphenylester),
5% 2-p-Pentyloxyphenyl-5-hexylpyrimidin,
5% 2-p-Hexyloxyphenyl-5-hexylpyrimidin,
5% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
15% Buttersäure-(p-trans-4-propylcyclohexylphenylester),
4% 4,4'-Bis-(trans-4-propylcyclohexyl)-2-fluorbiphenyl,
4% 4,4'-Bis-(trans-4-pentylcyclohexyl)-2-fluorbiphenyl und
7% p-(trans-4-Pentylcyclohexyl)-4'-(trans-4-propylcyclohexyl)-2-fluorbiphenyl

hat einen Schmelzpunkt von −9°, bis −30° keine smektische Phase, einen Klärpunkt von 65°, einen Quotienten $K_3/K_1$ von 0,84 bei 20° und eine Schwellenspannung von 1,4 Volt.

Beispiel 19

Eine Flüssigkristallphase bestehend aus
6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-(5-Propyl-1,3-dioxan-2-yl)-benzoesäure-(4-Cyan-3-fluorphenylester),
5% p-Ethylbenzoesäure-(4-Cyan-3-fluorphenylester),
5% p-Propylbenzoesäure-(4-Cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
17% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-pentylcyclohexyl)-2-fluorbiphenyl,

hat bis −20° keine smektische Phase, einen Quotienten $K_3/K_1$ von 0,81 bei 20° und eine Schwellenspannung von 1,3 Volt.

Beispiel 20

Man stellt eine Flüssigkristallphase her bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% 4-(trans-4-(trans-4-heptylcyclohexyl)-cyclohexyl)-2-fluorbenzonitril,
5% p-Ethylbenzoesäure-(4-Cyan-3-fluorphenylester),
5% p-Propylbenzoesäure-(4-Cyan-3-fluorphenylester),
5% 2-p-Pentyloxyphenyl-5-hexylpyrimidin,
6% 2-p-Hexyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
17% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-pentylcyclohexyl)-2-fluorbiphenyl.

Beispiel 21

Man stellt eine Flüssigkristallphase her bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% 4-(trans-4-(trans-4-Pentylcyclohexyl)-cyclohexancarbonsäure-(4-cyan-3-fluorphenylester),
5% p-Ethylbenzoesäure-(4-Cyan-3-fluorphenylester),
5% p-Propylbenzoesäure-(4-Cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
17% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-pentylcyclohexyl)-2-fluorbiphenyl.

Beispiel 22

Man stellt eine Flüssigkristallphase her bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
4% 2-(4-Cyan-3-fluorphenyl)-5-(trans-4-pentylcyclohexyl)-pyrimidin,
4% 4-(trans-4-(trans-4-pentylcyclohexyl)-cyclohexyl)-2-chlorbenzonitril,
8% p-(5-Propyl-1,3-dioxan-2-yl)-benzoesäure-(4-Cyan-3-fluorphenylester),
5% p-Ethylbenzoesäure-(4-Cyan-3-fluorphenylester),
5% p-Propylbenzoesäure-(4-Cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
17% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-pentylcyclohexyl)-2-fluorbiphenyl.

Die Phasen der Beispiele 20—22 weisen entsprechende günstige Eigenschaften auf.

Beispiel 23

Man stellt eine Flüssigkristallphase her bestehend aus

6% 2-p-Cyanphenyl-5-propyl-1,3-dioxan,
10% 2-p-Cyanphenyl-5-butyl-1,3-dioxan,
8% 2-p-Cyanphenyl-5-pentyl-1,3-dioxan,
8% p-(trans-4-Propylcyclohexyl)-benzoesäure-(4-cyan-3-fluorphenylester),
5% p-Ethylbenzoesäure-(4-Cyan-3-fluorphenylester),

5% p-Propylbenzoesäure-(4-Cyan-3-fluorphenylester),
5% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
17% Buttersäure-(p-trans-4-propylcyclohexylphenylester),
5% 4-(trans-4-Pentylcyclohexyl)-4'-(trans-4-propylcyclohexyl)-2-fluorbiphenyl und
4% 4,4'-Bis-(trans-4-pentylcyclohexyl)-2-fluorbiphenyl.

hat bis −30° keine smektische Phase, einen Quotienten $K_3/K_1$ von 0,83 bei 20° und eine Schwellenspannung von 1,4 Volt.

**Patentansprüche**

1. Flüssigkristalline Phase mit mindestens zwei flüssigkristallinen Komponenten und einer Schwellenspannung <1,6 Volt, dadurch gekennzeichnet, daß die Phase mindestens eine stark polare Komponente mit vermindertem Assoziationsgrad der Formel I

$$R^1—(A^1—Z^1)_m—A^2—Z^2—A^3 \qquad I$$

worin
$R^1$ Alkyl mit 1 bis 12 C-Atomen, worin auch eine oder zwei nicht benachbarte $CH_2$-Gruppen durch O-Atome, —CO—, —O—CO—, —CO—O— und/oder —CH=CH-Gruppen ersetzt sein können,
$A^1$ und $A^2$ jeweils 1,4-Phenylen, worin auch 1 bis 4 CH-Gruppen durch N ersetzt sein können oder 1,4-Cyclohexylen, worin auch eine oder zwei nicht benachbarte $CH_2$-Gruppen durch O ersetzt sein können,
$Z^1$ —CO—O—, —O—CO—, —$CH_2$—O—, —$OCH_2$—, —$CH_2CH_2$—, —CH=N—, —N=CH—, —N=NO—, —NO=N— oder eine Einfachbindung,
$Z^2$ —CO—O—, —O—CO—, —$CH_2O$—, —$OCH_2$—, —$CH_2CH_2$— oder eine Einfachbindung,
m 0, 1 oder 2, und
$A^3$ 3-Fluor-4-cyanphenyl oder 3,5-Difluor-4-cyanphenyl, bedeutet, und
zur Verminderung des Quotienten $K_3/K_1$ der elastischen Konstanten für die Biegung ($K_3$) und die Spreizung ($K_1$) der Phase auf einen Wert ≤ 1,1, mindestens eine unpolare flüssigkristalline Komponente enthält ausgewählt aus der Gruppe der Formeln IIa und IIb

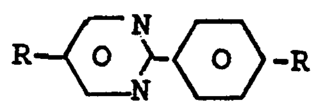
IIa

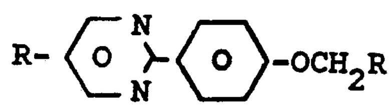
IIb

wobei R eine geradkettige Alkylgruppe bedeutet, und/oder in mindestens einer Verbindung der Formel I eine der Gruppen $A^1$ und $A^2$ Pyrimidin-2,5-diyl ist.

2. Flüssigkristalline Phase nach Anspruch 1, dadurch gekennzeichnet, daß sie mindestens eine unpolare flüssigkristalline Komponente enthält ausgewählt aud der Gruppe
(a) der Formeln A bis G

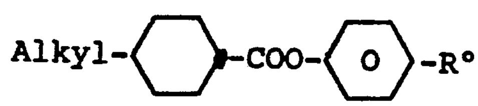
A

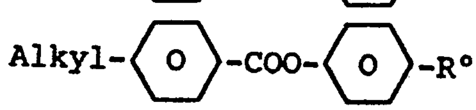
B

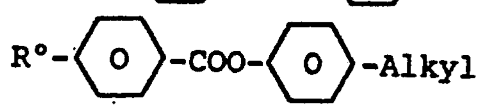
C

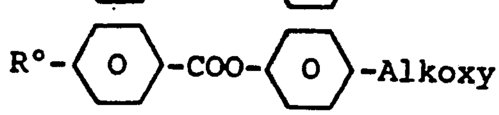
D

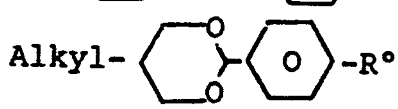
E

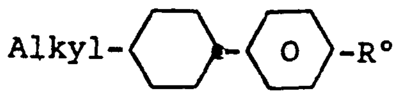

F

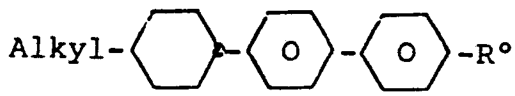

G

worin Alkyl und Alkoxy jeweils eine geradkettige Alkyl- bzw. Alkoxygruppe mit 1 bis 7 C-Atomen bedeutet und R° eine geradkettige Alkyl- oder Alkoxygruppe bzw. eine Oxaalkyl- oder Alkenylgruppe mit 1 bis 7 C-Atomen bedeutet,

(b) Verbindungen der folgenden Teilformeln

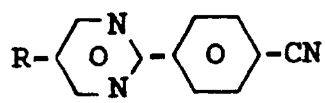

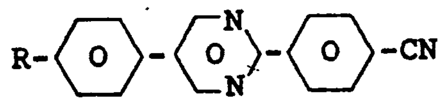

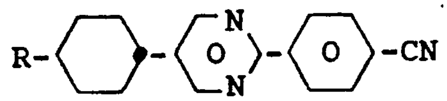

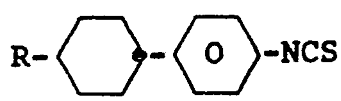

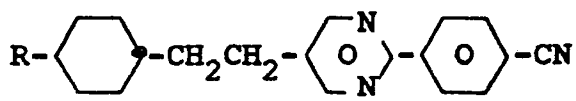

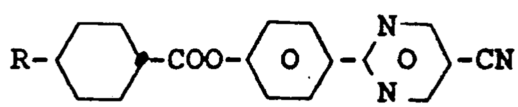

worin R eine geradkettige Alkylgruppe mit 1 bis 7 C-Atomen bedeutet, worin auch eine $CH_2$-Gruppe durch —O— oder —CH=CH— ersetzt sein kann.

3. Flüssigkristalline Phase nach Anspruch 1, dadurch gekennzeichnet, daß der Anteil der Verbindungen der Formel I im Bereich von 18 bis 73% liegt.

4. Flüssigkristalline Phase nach mindestens einem der Ansprüche 1 bis 3, dadurch gekennzeichnet, daß sie mindestens eine Verbindung ausgewählt aus der folgenden Gruppe enhält:

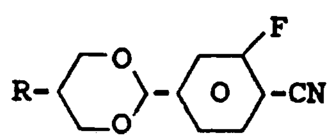

Ia

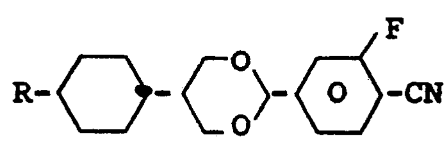

Ib

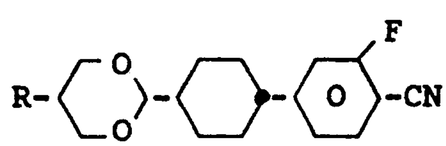

Ic

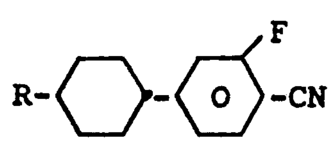

Id

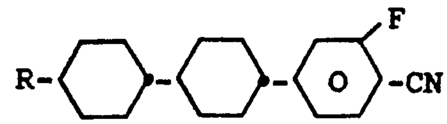

Ie

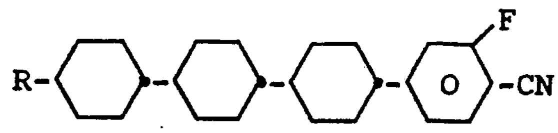

If

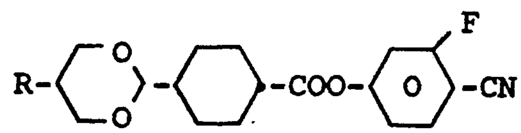

Ig

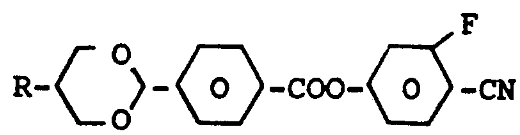

Ih

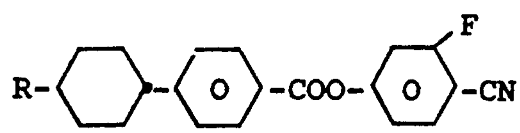

Ii

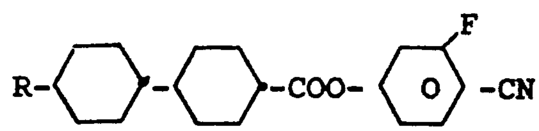

Ij

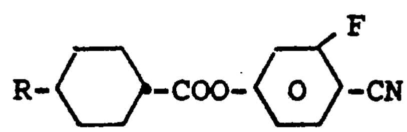

Ik

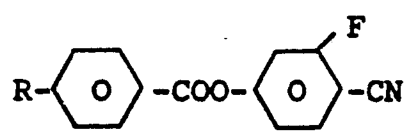

Il

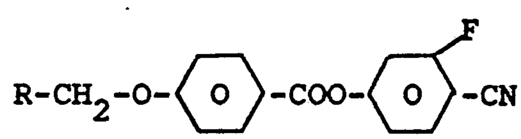

Im

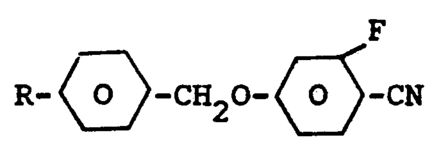

In

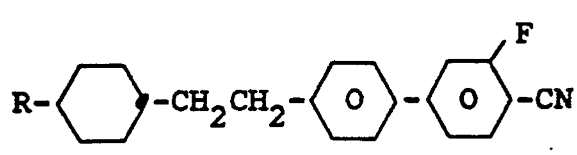

Iu

5. Flüssigkristalline Phase nach mindestens einem der Ansprüche 1 bis 4, dadurch gekennzeichnet, daß sie eine oder mehrere Verbindungen aus der folgenden Gruppe enthält:

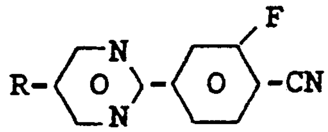 Io

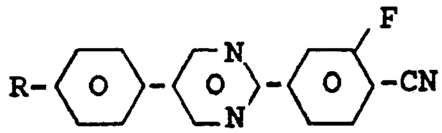 Ip

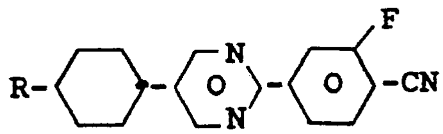 Iq

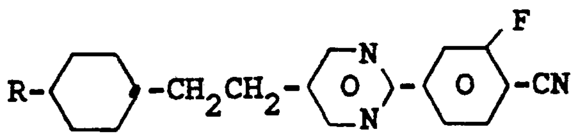 Ir

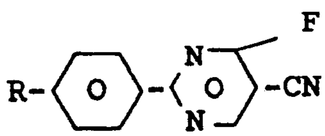 Is

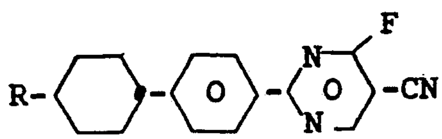 It

6. Flüssigkristalline Phase nach mindestens einem der Ansprüche 1 bis 5, dadurch gekennzeichnet, daß sie mindestens eine Verbindung ausgewählt aus der folgenden Gruppe enhält:

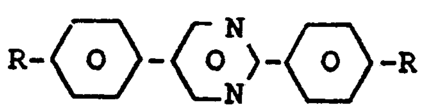 IId

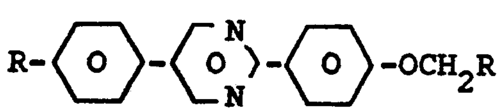 IIe

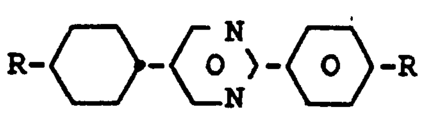 IIg

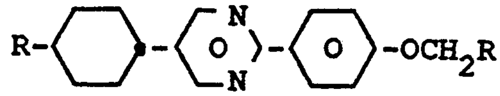 IIh

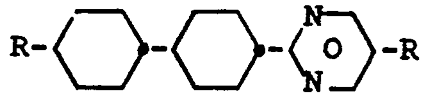 IIj

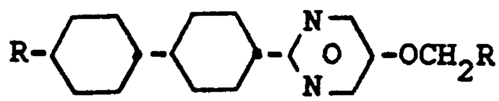 IIk

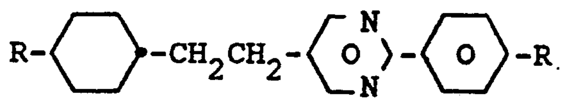 IIm

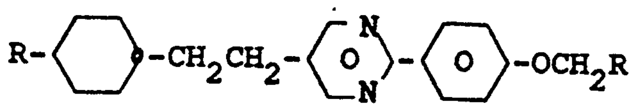 IIn

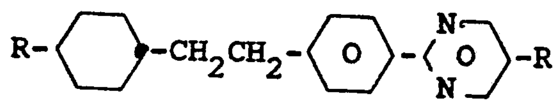 IIp

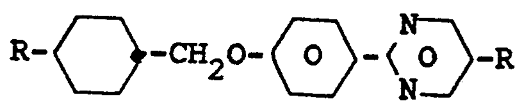 IIq

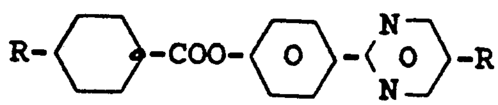 IIr

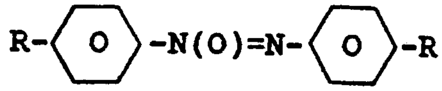 IIt,

worin R eine geradkettige Alkylgruppe mit 1 bis 7 C-Atomen bedeutet, worin auch eine $CH_2$-Gruppe durch —O— oder —CH=CH— ersetzt sein kann.

7. Flüssigkristalline Phase nach mindestens einem der Ansprüche 1 bis 6, dadurch gekennzeichnet, daß sie Verbindungen der Formel III

$$R^1—(Cy)_r—(Ph)_s—Z^3—Ph—CN \qquad III$$

worin

r 0, 1 oder 2,

s 0 oder 1,

r+s 1 oder 2,

$Z^3$ —CO—O— oder eine Einfachbindung bedeutet, und $R^1$ die angegebene Bedeutung hat, Cy trans-1,4-Cyclohexylen und Ph 1,4-Phenylen bedeutet, und/oder Verbindungen der Formel IV enthält,

$$R^1—(Cy)_r—Z^4—(Ph)_t—Z^5—(Cy)_s—R^2 \qquad IV$$

worin

t 0, 1 oder 2,

r+s+t 2, 3 oder 4,

$Z^4$ und $Z^5$ jeweils —CO—O—, —O—CO—, $—CH_2CH_2—$ oder eine Einfachbindung,

$R^2$ eine der Bedeutungen von $R^1$ hat, und $R^1$, Cy, Phe, r und s die angegebenen Bedeutungen haben.

8. Flüssigkristalline Phase nach mindestens einem der Ansprüche 1 bis 7, dadurch gekennzeichnet, daß die Schwellenspannung <1,5 Volt ist und $K_3/K_1 \leq 1{,}0$.

9. Flüssigkristalline Phase nach Anspruch 8, dadurch gekennzeichnet, daß die Schwellenspannung <1,4 Volt ist und $K_3/K_1 \leq 0{,}9$.

10. Flüssigkristalline Phase nach Anspruch 9, dadurch gekennzeichnet, daß die Schwellenspannung <1,2 Volt ist.

11. Flüssigkristalline Phase nach mindestens einem der Ansprüche 1 bis 10, dadurch gekennzeichnet, daß sie bis −30° keine smektische Phasenbereiche aufweist.

12. Verwendung von flüssigkristallinen Phasen nach einem der Ansprüche 1 bis 11 für elektrooptische Anzeigeelemente.

13. Elektrooptisches Anzeigeelement, dadurch gekennzeichnet, daß es eine Phase nach einem der Ansprüche 1 bis 11 enthält.

**Revendications**

1. Phase à cristaux liquides ayant au moins deux composants à cristaux liquides et une tension-seuil inférieure à 1,6 volts, caractérisée en ce que la phase contient au moins un composant fortement polaire avec degré d'association diminué de formule I

$$R^1—(A^1—Z^1)_m—A^2—Z^2—A^3 \qquad I$$

où

$R^1$ représente un alcoyle en $C_{1-12}$, où également un ou deux groupes $CH_2$ non voisins peuvent être représentés par des atomes d'oxygène, des groupes —CO—, —O—CO—, —CO—O— et/ou —CH=CH—,

$A^1$ et $A^2$ représentent chacun un 1,4-phénylène, où également de 1 à 4 groupes CH peuvent être remplacés par N ou un 1,4-cyclohexylène, où également un ou deux groupes $CH_2$ non voisins peuvent être remplacés par O,

$Z^1$ représente —CO—O—, —O—CO—, $—CH_2—O—$, $—OCH_2—$, $—CH_2CH_2—$, —CH=N—, —N=CH—, —N=NO—, —NO=N— ou une liaison simple,

$Z^2$ représente —CO—O—, —O—CO—, $—CH_2O—$, $—OCH_2—$, $—CH_2CH_2—$, ou une liaison simple,

m vaut 0, 1 ou 2, et

$A^3$ représente un 3-fluoro-4-cyanophényle ou un 3,5-difluoro-4-cyanophényle, et pour diminuer le quotient $K_3/K_1$ des constantes élastiques pour la courbure ($K_3$) et l'écartement ($K_1$) de la phase à une valeur inférieure à 1,1, au moins un composant à cristaux liquides non polaire contient un groupe choisi dans les groupes de formules IIa et IIb

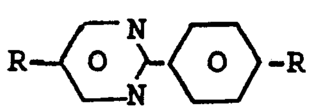

IIa

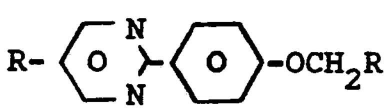

IIb

où R représente un groupe alcoyle à chaîne droite, et/ou où au moins un composé de formule I a les groupes $A^1$ et $A^2$ étant pyrimidin-2,5-diyle.

2. Phase à cristaux liquides selon la revendication 1, caractérisée en ce qu'elle contient au moins un composant à cristaux liquides non polaire choisi dans le groupe.

(a) des formules A à G

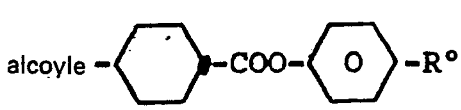

A

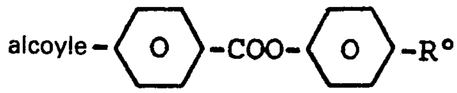

B

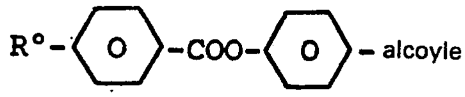

C

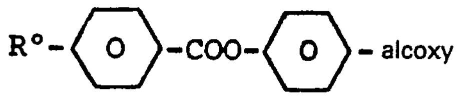

D

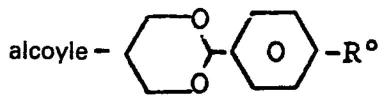

E

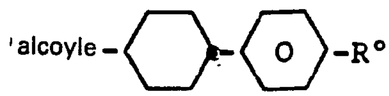

F

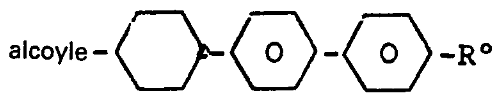

G

où alcoyle et alcoxy représentent chacun un groupe alcoyle ou alcoxy à chaîne droite en $C_{1-7}$ et R° représente un groupe alcoyle ou alcoxy à chaîne droite ou selon les cas un groupe oxaalcoyle ou alcényle en $C_{1-7}$,

(b) les composés de formules partielles

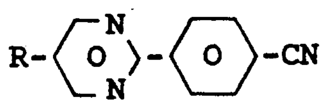

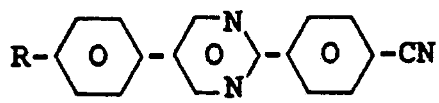

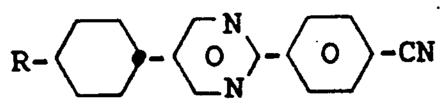

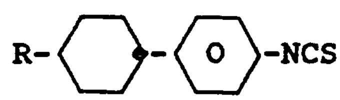

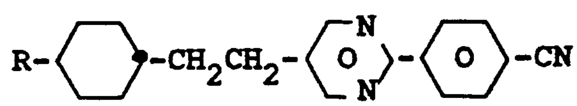

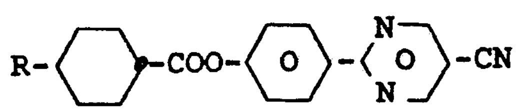

où R représente un groupe alcoyle en $C_{1-7}$, où également un groupe $CH_2$ peut être remplacé par —O— ou —CH=CH—.

3. Phase à cristaux liquides selon la revendication 1, caractérisée en ce que le pourcentage des composés de formule I se situe dans un intervalle de 18 à 73%.

4. Phase à cristaux liquides selon au moins l'une des revendications 1 à 3, caractérisée en ce qu'elle contient au moins un composé choisi dans les groupes suivants:

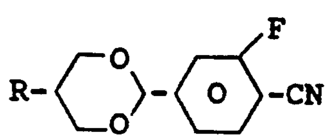

Ia

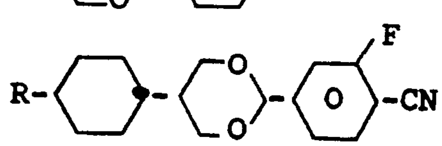

Ib

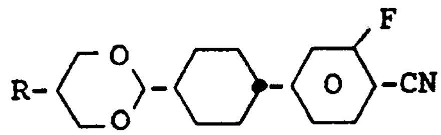

Ic

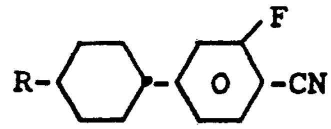

Id

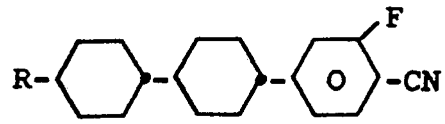

Ie

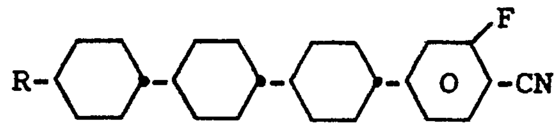

If

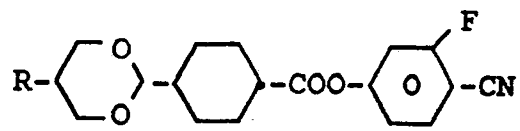

Ig

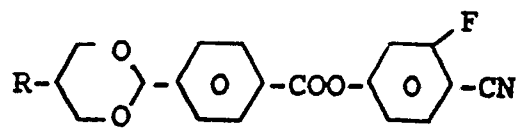

Ih

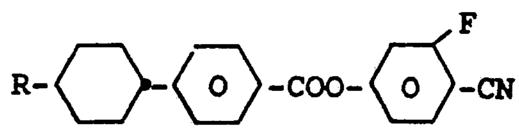

Ii

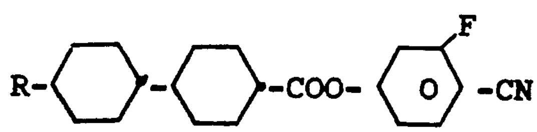

Ij

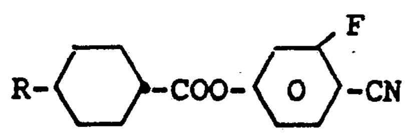

Ik

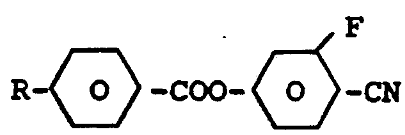

Il

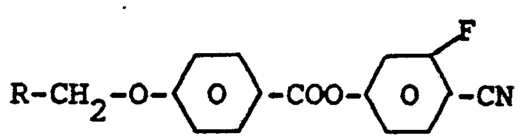

Im

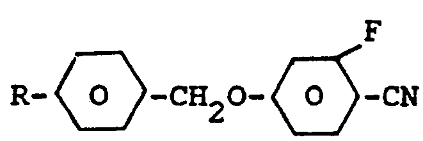

In

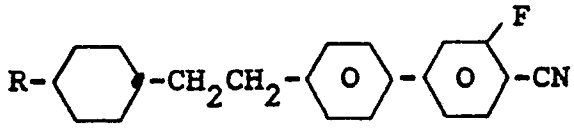

Iu

5. Phase à cristaux liquides selon au moins l'une des revendications 1 à 4, caractérisée en ce qu'elle contient un ou plusieurs composés des groupes suivants:

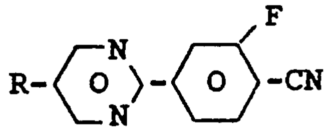

Io

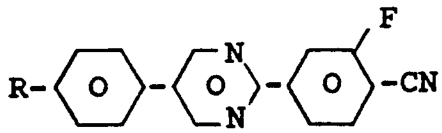

Ip

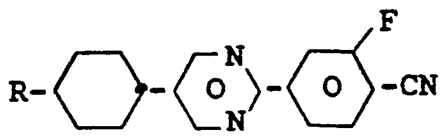

Iq

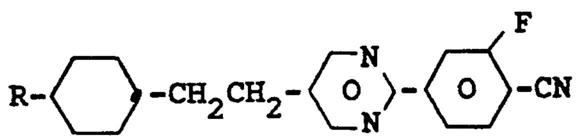

Ir

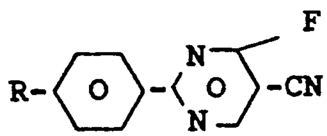

Is

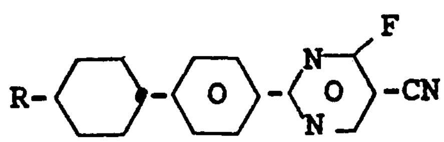

It

6. Phase à cristaux liquides selon au moins l'une des revendications 1 à 5, caractérisée en ce qu'elle contient au moins un composé choisi dans les groupes suivants:

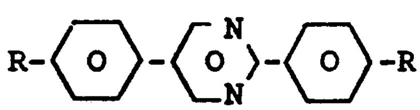

IId

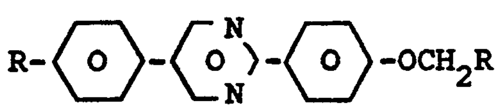

IIe

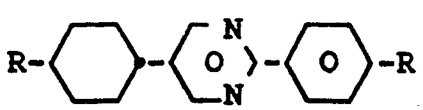

IIg

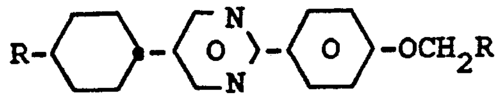

IIh

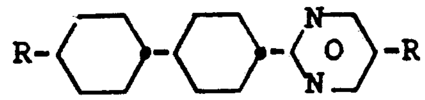

IIj

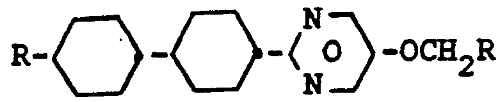

IIk

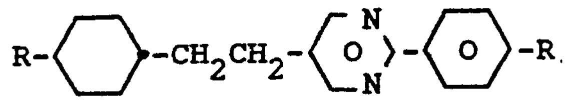

IIm

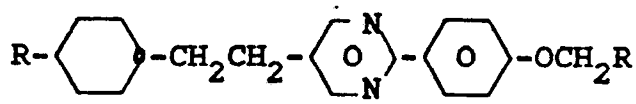

IIn

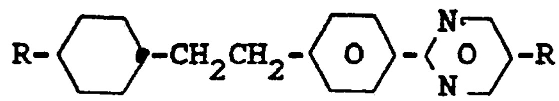

IIp

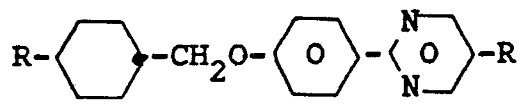

IIq

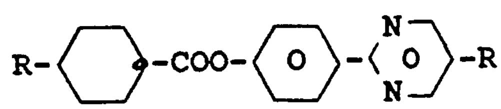

IIr

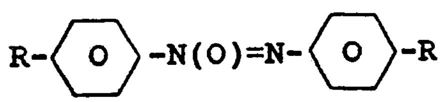

IIt.

où R représente un groupe alcoyle à chaîne droite en $C_{1-7}$, où également un groupe $CH_2$ peut être remplacé par —O— ou —CH=CH—.

7. Phase à cristaux liquides selon au moins l'une des revendications 1 à 6, caractérisée en ce qu'elle contient des composés de formule III

$$R^1—(Cy)_r—(Ph)_s—Z^3—Ph—CN \qquad III$$

où

r vaut 0, 1 ou 2,

s vaut 0 ou 1,

r+s vaut 1 ou 2,

$Z^3$ représente —CO—O— ou une liaison simple, et $R^1$ a la signification donnée ci-dessus, Cy représente un trans-1,4-cyclohexylène et Ph un 1,4-phénylène, et/ou des composés de formule IV;

$$R^1—(Cy)_r—Z^4—(Ph)_t—Z^5—(Cy)_s—R^2 \qquad IV$$

où

t vaut 0, 1 ou 2,

r+s+t vaut 2, 3 ou 4,

$Z^4$ et $Z^5$ représent à chaque fois —CO—O—, —O—CO—, —$CH_2CH_2$— ou une liaison simple,

$R^2$ a l'une des significations de $R^1$, et $R^1$, Cy, Phe, r et s ont les significations indiquées.

8. Phase à cristaux liquides selon l'une des revendications 1 à 7, caractérisée en ce que la tension-seuil est inférieure à 1,5 volts et $K_3/K_1$ inférieur ou égal à 1,0.

9. Phase à cristaux liquides selon la revendication 9, caractérisée en ce que la tension-seuil est inférieure à 1,4 volts et $K_3/K_1$ inférieur ou égal à 0,9.

10. Phase à cristaux liquides selon la revendication 9, caractérisée en ce que la tension-seuil est inférieure à 1,2 volts.

11. Phase à cristaux liquides selon au moins l'une des revendications 1 à 10, caractérisée en ce que jusqu'à −30°, elle ne présente pas d'intervalle de phase smectique.

12. Application de phase à cristaux liquides selon l'une des revendications 1 à 11 pour les élements d'affichage électro-optiques.

13. Élement d'affichage électro-optique caractérisé en ce qu'il contient une phase selon l'une des revendications 1 à 11.

## Claims

1. Liquid crystal phase having at least two liquid crystal components and a threshold voltage <1.6 volt, characterized in that the phase contains at least one highly polar component of reduced degree of association of the formula I

$$R^1—(A^1—Z^1)_m—A^2—Z^2—A^3 \qquad \text{I}$$

in which

$R^1$ is alkyl of 1 to 12 C atoms, in which in addition one or two non-adjacent $CH_2$ groups can be replaced by O atoms, —CO—, —O—CO—, —CO—O— and/or —CH=CH— groups,

$A^1$ and $A^2$ are each 1,4-phenylene, in which in addition 1 to 4 CH groups can be replaced by N, or 1,4-cyclohexylene, in which in addition one or two non-adjacent $CH_2$ groups can be replaced by O,

$Z^1$ is —CO—O—, —O—CO—, —$CH_2$—O—, —$OCH_2$—, —$CH_2CH_2$—, —CH=N—, —N=CH—, —N=NO—, —NO=N— or a single bond,

$Z^2$ is —CO—O—, —O—CO—, —$CH_2O$—, —$OCH_2$—, —$CH_2CH_2$— or a single bond,

m is 0, 1 or 2 and

$A^3$ is 3-fluoro-4-cyanophenyl or 3,5-difluoro-4-cyanophenyl and

to reduce the quotient $K_3/K_1$ of the elastic constants for bending ($K_3$) and spreading ($K_1$) of the phase to a value ≤1.1, contains at least one apolar liquid-crystalline component selected from the group of the formulae IIa and IIb

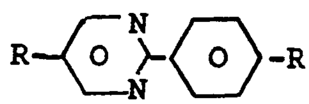

IIa

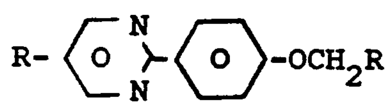

IIb

where R is a straight-chain alkyl, and/or in at least one compound of the formula I one of the groups $A^1$ and $A^2$ is pyrimidine-2,5-diyl.

2. Liquid-crystal phase according to Claim 1, characterized in that it contains at least one apolar liquid-crystalline component selected from the group

(a) of the formulae A to G

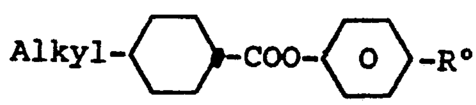

A

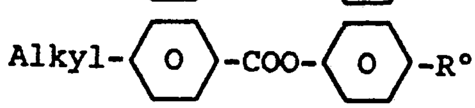

B

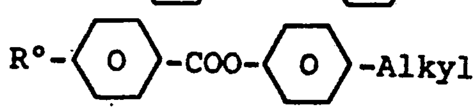

C

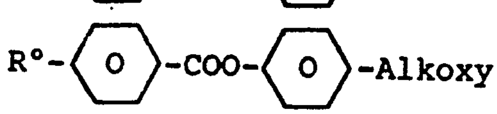

D

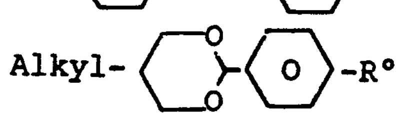

E

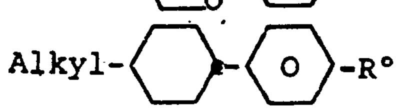

F

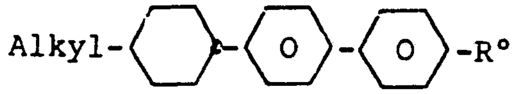 G

where alkyl and alkoxy are each straight-chain alkyl or alkoxy of 1 to 7 C atoms and R° is straight-chain alkyl or alkoxy or oxaalkyl or alkenyl of 1 to 7 C atoms,

(b) compounds of the following partial formulae

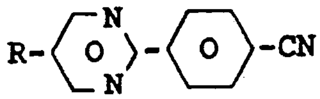

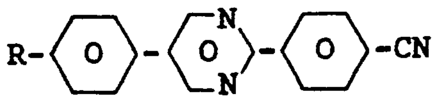

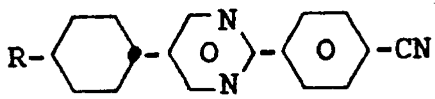

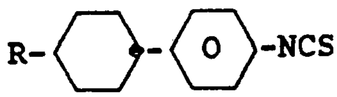

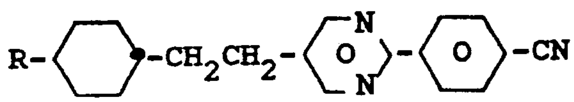

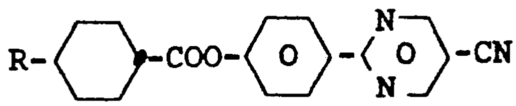

where R is a straight-chain alkyl of 1 to 7 C atoms in which a $CH_2$ group can also be replaced by —O— or —CH=CH—.

3. Liquid-crystal phase according to Claim 1, characterized in that the proportion of compounds of the formula I is within the range from 18 to 73%.

4. Liquid-crystal phase according to at least one of Claims 1 to 3, characterized in that it contains at least one compound selected from the following group:

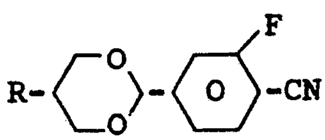 Ia

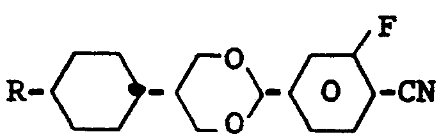 Ib

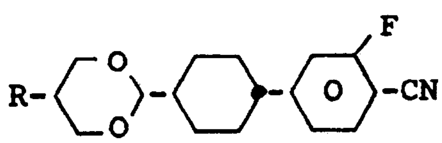 Ic

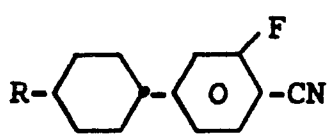 Id

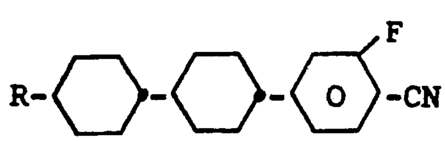 Ie

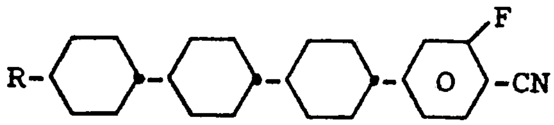
If

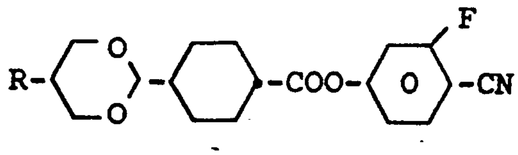
Ig

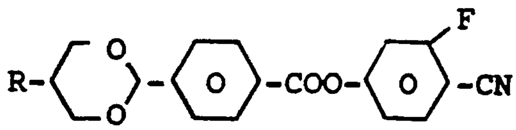
Ih

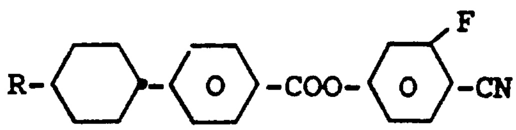
Ii

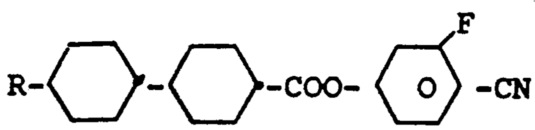
Ij

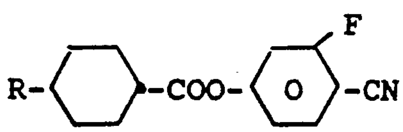
Ik

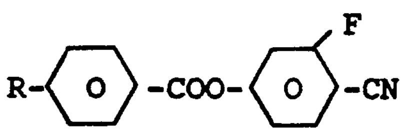
Il

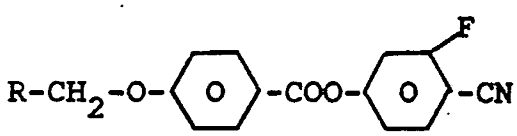
Im

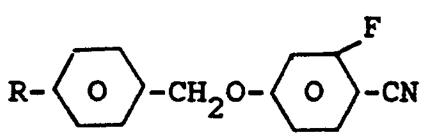
In

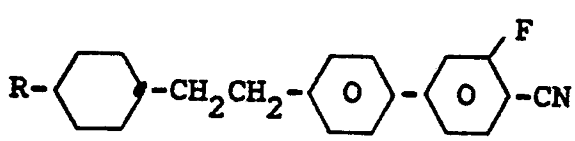
Iu

5. Liquid-crystal phase according to at least one of Claims 1 to 4, characterized in that it contains one or more compounds of the following group:

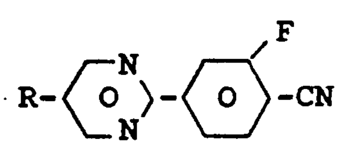
Io

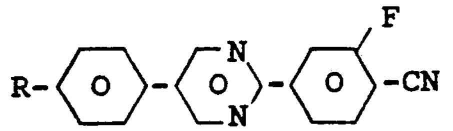 Ip

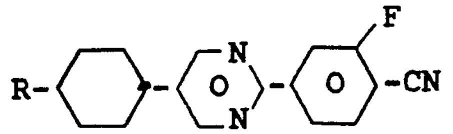 Iq

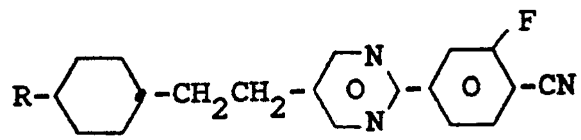 Ir

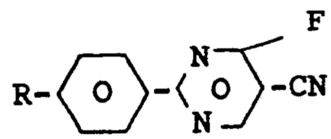 Is

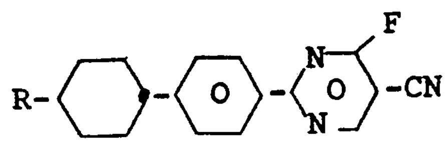 It

6. Liquid-crystal phase according to at least one of Claims 1 to 5, characterized in that it contains at least one compound selected from the following group:

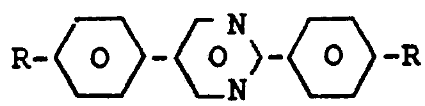 IId

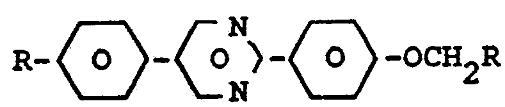 IIe

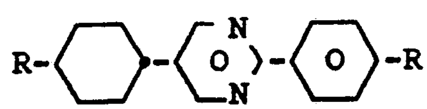 IIg

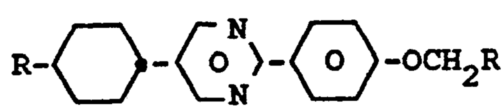 IIh

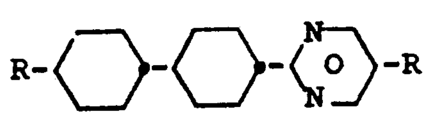 IIj

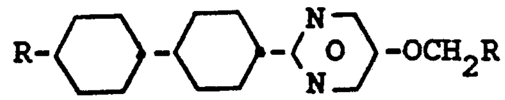 IIk

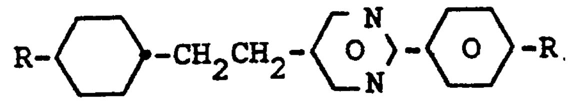 IIm

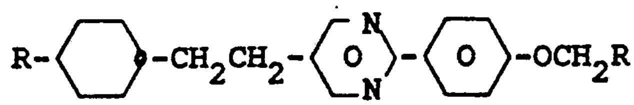 IIn

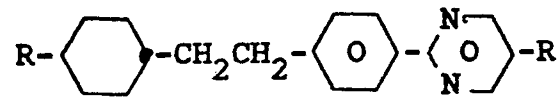 IIp

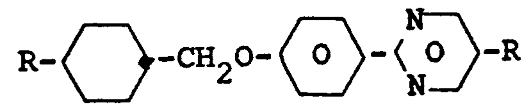 IIq

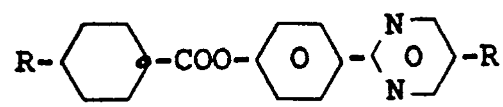 IIr

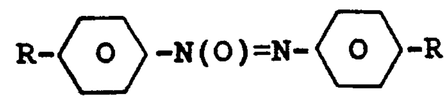 IIt.

where R is straight-chain alkyl of 1 to 7 carbon atoms in which a $CH_2$ group can also be replaced by —O— or —CH=CH—.

7. Liquid-crystal phase according to at least one of Claims 1 to 6, characterized in that it contains compounds of the formula III

$$R^1—(Cy)_r—(Ph)_s—Z^3—Ph—CN \qquad III$$

where

r is 0, 1 or 2,

s is 0 or 1,

r+s is 1 or 2,

$Z^3$ is —CO—O— or a single bond, and $R^1$ is as defined above,

Cy is trans-1,4-cyclohexylene and

Ph is 1,4-phenylene and/or compounds of the formula (IV)

$$R^1—(Cy)_r—Z^4—(Ph)_t—Z^5—(Cy)_s—R^2 \qquad IV$$

where

t is 0, 1 or 2,

r+s+t is 2, 3 or 4,

$Z^4$ and $Z^5$ are each —CO—O—, —O—CO—, —$CH_2CH_2$— or a single bond, $R^2$ has one of the meanings of $R^1$, and $R^1$, Cy, Phe, r and s are each as defined above.

8. Liquid-crystal phase according to at least one of Claims 1 to 7, characterized in that the threshold voltage is <1.5 volts and $K_3/K_1$ is $\leq 1.0$.

9. Liquid-crystal phase according to Claim 8, characterized in that the threshold voltage is <1.4 volts and $K_3/K_1$ is $\leq 1.0$.

10. Liquid-crystal phase according to Claim 9, characterized in that the threshold voltage is <1.2 volts.

11. Liquid-crystal phase according to at least one of Claims 1 to 10, characterized in that it has no smectic phase ranges up to −30°.

12. Use of liquid crystal phases according to any one of Claims 1 to 11, for electro-optical display elements.

13. Electro-optical display element, characterized in that it contains a phase according to any one of Claims 1 to 11.